**Europäisches Patentamt**

**European Patent Office**

**Office européen des brevets**

(19)

(11) Veröffentlichungsnummer: **0 123 243**
**A2**

# (12) EUROPÄISCHE PATENTANMELDUNG

(21) Anmeldenummer: **84104263.3**

(22) Anmeldetag: **14.04.84**

(51) Int. Cl.³: **H 04 B 12/02**

(30) Priorität: **18.04.83 US 485988**

(43) Veröffentlichungstag der Anmeldung:
**31.10.84 Patentblatt 84/44**

(84) Benannte Vertragsstaaten:
**FR GB**

(71) Anmelder: **International Standard Electric Corporation**
**320 Park Avenue**
**New York New York 10022(US)**

(72) Erfinder: **Briscoe, Milton Rodney**
**6600 Coach Light Circle**
**Raleigh North Carolina(US)**

(74) Vertreter: **Villinger, Bernhard, Dipl.-Ing. et al,**
**Standard Elektrik Lorenz AG Patent- und Lizenzwesen**
**Postfach 300 929 Kurze Strasse 8**
**D-7000 Stuttgart 30(DE)**

(54) **Prüfbare Kodier- und Dekodieranordnung.**

(57) Eine Kodier- und Dekodieranordnung verbindet digitale und analoge Fernsprechleitungen miteinander. Sie enthält in einem Sende- und einem Empfangsweg jeweils eine Mehrzahl von Baugruppen zur Signalverarbeitung. Digital ankommende Signal werden verarbeitet und in analoge Signale umgewandelt. Abgehende analoge Signale werden in digitale Signale umgewandelt und verarbeitet. Eine Mehrzahl von Multiplexern ist vorhanden, die jeweils vor dem Signaleingang einer Baugruppe des Sende- oder Empfangswegs angeordnet sind und an die außerdem Testleitungen angeschlossen sind. Die Multiplexer sind durch Steuersignale so schaltbar, daß vorgewählte Testwege durch die gesamte Anordnung gebildet werden. Dabei enthält jeder Testweg eine bestimmte Kombination von Baugruppen. Über diese Testwege können Testsignale über einzelne Baugruppen gesendet werden, um die Eigenschaften dieser Baugruppen zu überprüfen. Ein weiterer Multiplexer ist am Ende der Testwege angeschlossen und hat die Aufgabe, den jeweils auswählten Testweg mit einem Ausgang der Anordnung zu verbinden. Die Steuereingänge der Multiplexer werden mit Steuersignalen beaufschlagt, von denen vorbestimmte Kombinationen in verschiedenen Speicherplätzen eines Testspeichers abgespeichert sind. Sie können von dort durch Adressierung des betroffenen Speicherplatzes abgerufen werden. Die Speicherplätze des Testspeichers werden von einem Zwischenspeicher aus adressiert, der an einen Datenbus angeschlossen ist, welcher wiederum die entsprechende Adresse des zu adressierenden Speicherplatzes trägt. Der Zwischenspeicher wird von einem Signal aktiviert, das durch einen von außen gesteuerten Adressdekoder abgegeben wird.

./...

Fig. 2

M.R.Briscoe -1

Prüfbare Kodier- und Dekodieranordnung

Die Erfindung betrifft eine Anordnung zur digitalen Verarbeitung von Sprachsignalen nach dem Oberbegriff des Hauptanspruchs.

Im Fernsprechwesen gewinnen digitale Signalübertragungstechniken über große Entfernungen immer mehr an Bedeutung. Die Anschlußleitungen zwischen den Vermittlungsstellen und den Teilnehmereinrichtungen werden dagegen üblicherweise in Analog-Technik betrieben. Beim Übergang von den digital betriebenen zu den analog betriebenen Teilen des Netzes muß deshalb eine Kodier- und Dekodieranordnung zwischengeschaltet werden. Solche Kodier-/Dekodieranordnungen bewirken digitale Filterung, Analog-Digital-Wandlung und Digital-Analog-Wandlung und häufig auch Echounterdrükkung. Jede derartige Kodier-/Dekodieranordnung enthält typischerweise eine Mehrzahl signalverarbeitender Baugruppen, die die genannten Aufgaben ausführen und die üblicherweise in zwei getrennten Signalwegen liegen, einem für die Verarbeitung des ankommenden und einem für die Verarbeitung des abgehenden Signals.

Je komplexer eine Kodier- /Dekodieranordnung ist, desto dringender ist der Bedarf an Möglichkeiten zur Überprüfung

ZT/P1-Bs/Bl
10.04.1984

M.R.Briscoe -1

der einzelnen signalverarbeitenden Baugruppen. Nur damit
läßt sich die richtige Wirkungsweise der gesamten Anordnung
gewährleisten.

Es sind Kodier-/Dekodieranordnungen der oben genannten
Art bekannt, bei denen es möglich ist, Filterkoeffizienten
in Abhängigkeit von den auf der Anschlußleitung vorherrschenden Bedingungen, von der Lautstärke oder von anderen
Parametern abhängig zu machen. Damit können die Übertragungsfunktionen der digitalen Filter geändert werden, wenn
sich die genannten Parameter ändern und wenn dadurch die
Qualität der Signalwiedergabe verbessert wird. In solchen
Fällen ist es wünschenswert, nicht nur die Unversehrtheit
der Baugruppen und ihre richtige Wirkungsweise zu überprüfen, sondern auch die augenblicklichen Werte der Koeffizienten zu bestimmen. Zu diesem Zweck wurden auch schon
verschiedene Testanordnungen entwickelt, mit denen eine
Kodier-/Dekodieranordnung mit mehr oder weniger Aufwand
mehr oder weniger genau geprüft werden kann. Die Erfahrung
mit derartigen Testanordnungen hat jedoch gezeigt, daß sie
entweder zu aufwendig und damit zu teuer sind, indem sie
einen beträchtlichen Aufwand an zusätzlichen Schaltungsteilen außerhalb der Kodier-/Dekodieranordnung erfordern
oder daß sie nicht in der Lage sind, alle Aufgaben zu
erfüllen, die erforderlich sind, um eine zufriedenstellende
Funktion der Kodier-/Dekodieranordnung zu gewährleisten.

Der Erfindung liegt die Aufgabe zugrunde, eine Kodier-/
Dekodieranordnung anzugeben, die die genannten Nachteile
nicht aufweist.

Die Aufgabe wird erfindungsgemäß gelöst durch eine Anordnung mit den Merkmalen des Hauptanspruchs.

M.R.Briscoe -1

Vorteilhafte Ausgestaltungen der Erfindung sind den Unteransprüchen zu entnehmen.

Im folgenden wird die Erfindung anhand eines Ausführungsbeispiels unter Zuhilfenahme der beiliegenden Zeichnung
weiter erläutert.

Figur 1    zeigt schematisch eine Gruppe erfindungsgemäßer
Kodier-/Dekodieranordnungen zusammen mit zusätzlichen Schaltungsteilen, wie sie in Telefonvermittlungen anzutreffen sind.

Figur 2    zeigt ein Blockschaltbild der Betriebs- und
Testschaltungsteile, die in jedem der Kodier-/
Dekodieranordnungen nach Figur 1 enthalten
sind.

Figur 3    zeigt ein Blockschaltbild des Programmierteils
einer jeden Kodier-/Dekodieranordnung nach
Figur 1.

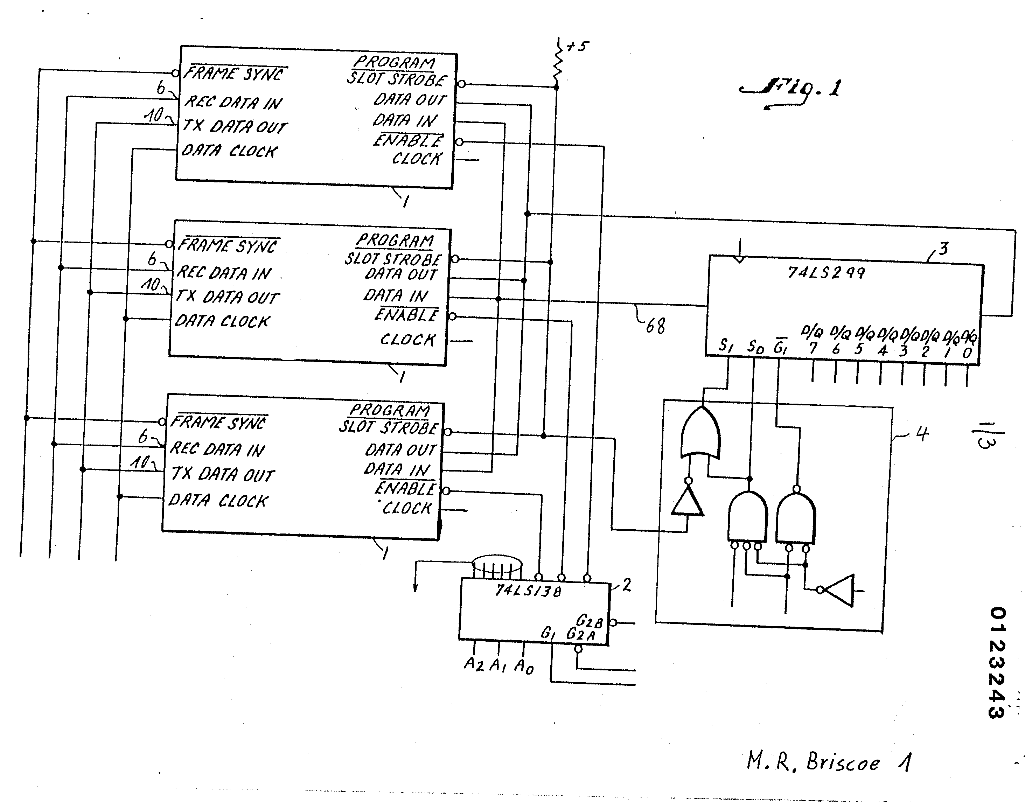

Figur 1 enthält drei Kodier-/Dekodieranordnungen 1 entsprechend der Erfindung. In der Zeichnung sind drei solcher Kodier-/Dekodieranordnungen 1 parallel geschaltet;
eine Telefonvermittlungsstelle enthält eine große Anzahl
solcher Anordnungen 1. Jede Kodier-/Dekodieranordnung 1
ist einer Teilnehmerleitung zugeordnet. Ein Auswahlmultiplexer 2 wählt die zu testende Kodier-/Dekodieranordnung 1
aus, indem der Spannungspegel am Akitivierungseingang
(enable) der ausgewählten Kodier-/Dekodieranordnung 1
geändert wird. Der gezeigte Auswahlmultiplexer 2 ist in
der Lage, bis zu acht Kodier-/Dekodieranordnungen 1 zu
bedienen. Diese können auf einer gemeinsamen Platine

M.R.Briscoe -1

angeordnet sein. Ein Schieberegister 3 wird von einer Logikschaltung 4 angesteuert. Ein Datenausgang des Schieberegisters 3 ist durch eine Verbindungsleitung 68 mit je einem
Dateneingang der Kodier-/Dekodieranordnungen 1 verbunden.

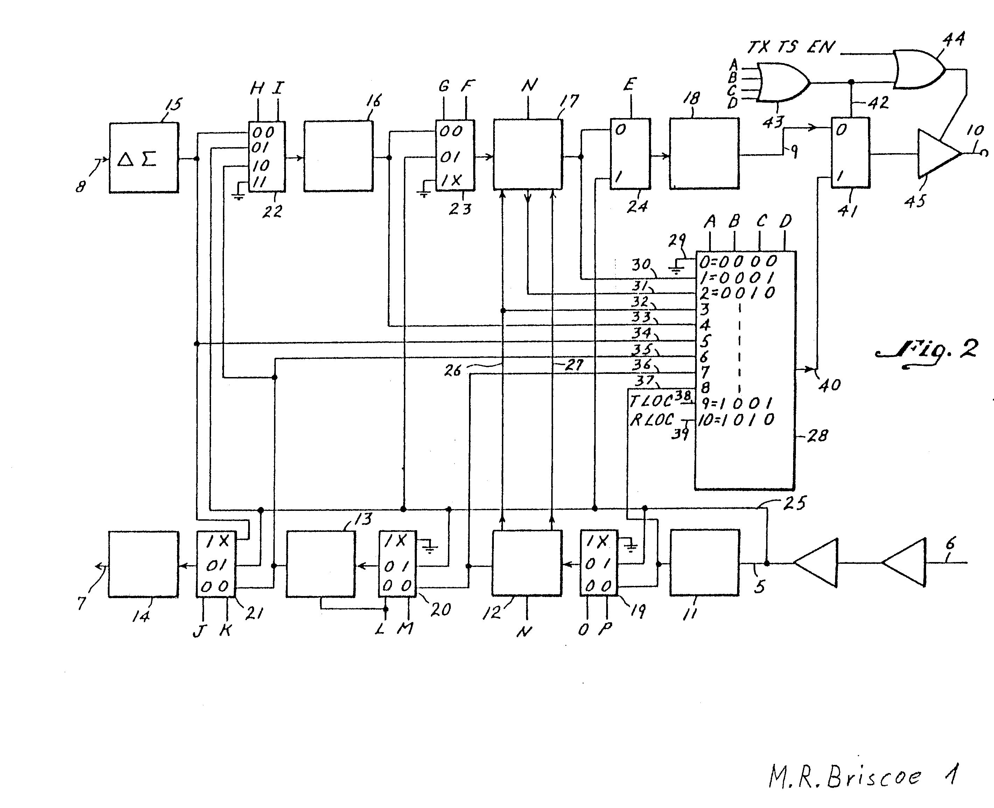

Die Betriebs- und Testschaltungsteile einer Kodier-/Dekodieranordnung 1 werden nun anhand der Figur 2 näher erklärt. Ein erster Signalweg 5 für ankommende oder empfangene
Signale oder Daten führt über verschiedene Baugruppen von
einer digitalen Eingangsleitung 6 zu einer analogen Ausgangsleitung 7, die mit der Teilnehmeranschlußleitung verbunden ist. Andererseits werden Ausgangssignale, die von
der Teilnehmeranschlußleitung kommen, von einer analogen
Eingangsleitung 8 über einen zweiten Signalweg 9 für abgehende Signale im Betriebsfall an eine digitale Ausgangsleitung 10 übertragen.

Der erste Signalweg 5 enthält eine Ein-/Ausgangsbaugruppe
11 mit Expander, ein Empfangsfilter mit Verstärker 12, einen
Interpolator und Digital-Analog-Wandler 13 und einen Pulsbreitenmodulator 14. Der zweite Signalweg 9 enthält einen
Analog-Digital-Wandler 15, beispielsweise einen Delta-Sigma-
Modulator, eine Dezimiereinheit 16, ein Sendefilter mit
Verstärker 17 und eine Ein-/Ausgangsbaugruppe mit Kompressor 18. Im ersten Signalweg 5 und im zweiten Signalweg 9
ist vor das Empfangsfilter mit Verstärker 12, vor den Interpolator und Digital-Analog-Wandler 13, vor den Pulsbreitenmodulator 14, vor der Dezimiereinheit 16, vor dem
Sendefilter mit Verstärker 17 und vor der Ein-/Ausgangsbaugruppe mit
Kompressor 18 jeweils ein Multiplexer 19, 20, 21, 22, 23
und 24 eingefügt. Vom ersten Signalweg 5 zweigt eine Testleitung 25 vor der Ein-/Ausgangsbaugruppe mit Expander 11
ab. Die Testleitung 25 führt zu jedem der Multiplexer 19,

M.R.Briscoe -1

20, 21, 22, 23 und 24. Das an der digitalen Eingangsleitung 6 ankommende Signal wird damit an alle Multiplexer 19, 20, 21, 22, 23 und 24 angelegt. Diese sind über Steuereingänge O, P; L, M; J, K; H, I; G, F und E steuerbar. Ein Teil der Multiplexer (19, 20, 22 und 23) weist auch geerdete Eingänge auf. Die Steuereingänge E bis P werden binär angesteuert, so daß die Multiplexer 19 bis 24 als Schalter wirken, die wahlweise einen der Eingänge mit dem jeweiligen Ausgang verbinden, welcher wiederum mit der nachfolgenden Baugruppe 12 bis 14 und 16 bis 18 verbunden ist. Auf diese Weise ergeben sich verschiedene Testsignalwege, die sich wahlweise aus verschiedenen Abschnitten des ersten und zweiten Signalwegs 5 und 9 und der Testleitung 25 zusammensetzen und die im ersten Signalweg 5 und im zweiten Signalweg 9 liegenden Baugruppen 12 bis 18 teils durchlaufen und teils umgehen. Damit ist der interne Aufbau der vorzugsweise in LSI-Technik aufgebauten Kodier-/Dekodieranordnung 1 zum Zweck der Prüfung der Kodier-/Dekodieranordnung 1 änderbar. Mittels der Multiplexer 19 bis 24 können programmgesteuert verschiedene Verbindungen zwischen den äußeren Anschlußstiften REC DATA IN und TX DATA OUT aufgebaut werden. Ein einzelner Block kann mittels eines kürzeren Testworts wirkungsvoller überprüft werden als die ganze Kodier-/Dekodieranordnung 1 mit einem sehr langen Testwort.

Das Empfangsfilter mit Verstärker 12 und das Sendefilter mit Verstärker 17 sind außerdem untereinander durch eine Verbindungsleitung 26 verbunden, über die verschiedenartige Informationen ausgetauscht werden, sowie durch eine weitere Verbindungsleitung 27, durch welche eine Testfolge übertragen wird. Die Übertragungsrichtung geht jeweils vom Empfangsfilter mit Verstärker 12 zum Sendefilter mit

M.R.Briscoe -1

Verstärker 17. Das auf der Verbindungsleitung 26 übertragene Signal enthält Informationen über die Eigenschaften des ankommenden Digitalsignals, das gerade das Empfangsfilter mit Verstärker 12 durchläuft. Diese Informationen werden in bekannter Weise durch Multiplikation mit geeigneten Koeffizienten verarbeitet und die so gewonnene Information dient dann dazu, im Sendefilter mit Verstärker 17 das im zweiten Signalweg 9 übertragene digitale Signal so zu verändern, daß Echos unterdrückt oder gar augelöscht werden. Solche Echos entstehen, wenn Signale, die vom ersten Signalweg 5 kommen, in der Teilnehmeranschlußleitung in den zweiten Signalweg 9 reflektiert werden. Nähere Angaben hierüber sind beispielsweise der US-Patentanmeldung 485 987 vom 18. April 1983 zu entnehmen.

Weitere Vorteile der erfindungsgemäßen Anordnung ergeben sich dann, wenn die Kodier-/Dekodieranordnung 1 auf einem einzigen Substrat aufgebracht ist, beispielsweise in LSI-Technik. Durch die innerhalb der Kodier-/Dekodieranordnung 1 vorhandene Testleitung 25 und die Multiplexer 19 bis 24 besteht die Möglichkeit, auf Punkte innerhalb der Signalwege 5 und 9 zuzugreifen, an denen das digitale Signal mit einer Abtastrate von 32 kHz erscheint. Dies kann für verschiedene Anordnungen vorteilhaft sein. So können beispielsweise durch Zugriff auf den Ausgang der Dezimiereinheit 16 und den Eingang des Interpolators und Digital-Analog-Wandlers 13 die Baugruppen 16 und 13 als selbständige Analog-Digital- und Digital-Analog-Wandler ohne Kanalfilter verwendet werden. Auch kann der bei der Inbetriebnahme der Kodier-/Dekodieranordnung 1 erforderliche Abgleich durch Umgehung der Ein-/Ausgangsbaugruppen 11 und 18 vereinfacht werden. Indem Signale erst am Eingang des

M.R.Briscoe -1

Empfangsfilters mit Verstärker 12 eingespeist und bereits am Ausgang des Sendefilters mit Verstärker 17 ausgekoppelt werden, werden die Ein-/Ausgangsbaugruppen 11 und 18 umgangen und Testimpulse während des Abgleichs werden nicht beeinflußt. Darüberhinaus können die Multiplexer 19 bis 24 verwendet werden, um innerhalb der Anordnung eine digitale Schleife zu bilden. Der Ausgang des Interpolators und Digital-Analog-Wandlers 13, der normalerweise den Pulsbreitenmodulator 14 steuert, wird mit dem Eingang der Dezimiereinheit 16 verbunden. Auf diese Weise kann ein digitales Eingangssignal von der digitalen Eingangsleitung 6 zu Testzwecken die gesamte Kodier-/Dekodieranordnung 1 durchlaufen und an der digitalen Ausgangsleitung 10 wieder abgegriffen werden.

Die Kodier-/Dekodieranordnung 1 enthält auch interne Phasenregelkreise (PLL), die jedoch in den Zeichnungen nicht dargestellt sind. Auch diese Kreise mit ihren Ausgängen TLOC und RLOC können von außen überwacht werden. Wenn ein Phasenregelkreis eingerastet ist, dann laufen äußerer und innerer Rahmentakt synchron. Die an den LOC-Ausgängen abgreifbaren Signale entstehen jeweils durch eine Exklusiv-Oder-Verknüpfung von äußerem und innerem Rahmentakt.

Alle oben genannten Möglichkeiten werden durch ein weiter unten zu beschreibendes Steuerteil über die hexadezimale Adresse OE ausgewählt.

Die Kodier-/Dekodieranordnung 1 enthält außerdem einen weiteren Multiplexer 28 mit vier Steuereingängen A, B, C und D. Ein Signaleingang 29 des Multiplexers 28 ist geerdet, wetiere Signaleingänge 30 bis 37 sind an Ausgänge

M.R.Briscoe -1


der Baugruppen 17, 12, 16, 15, 13, 12 und 11 angeschlossen
und zwei weitere Signaleingänge 38 und 39 empfangen die
TLOC- und RLOC-Signale, die die Zeitschlitze für die empfangenen und gesendeten Signale anzeigen.


Der Multiplexer 28 weist einen Signalausgang 40 auf, der
an einen Eingang eines weiteren Multiplexers 21 angeschlossen ist, der der Betriebsartenumschaltung dient.
Je nachdem welche Kombination von "Nullen" und "Einsen"
an die Steuereingänge A, B, C und D des Multiplexers 28
angelegt ist, wird einer der Signaleingänge 29 bis 39
mit dem Signalausgang 40 verbunden. Damit wird die zugehörige Information an den der Betriebsartenumschaltung
dienenden Multiplexer 41 weitergegeben. Der zweite Signalweg 9 führt an einen weiteren Eingang des Multiplexers 41.
Der Multiplexer 41 schaltet entweder das vom Signalausgang
40 kommende oder das vom zweiten Signalweg 9 kommende
Signal auf die digitale Ausgangsleitung 10 durch. Die durch den Multiplexer 41 erfolgende Betriebsartenumschaltung erfolgt über
einen Steuereingang 42, der von einem Oder-Gatter 43 gesteuert wird. Das Oder-Gatter 43 hat vier Steuereingänge
A, B, C und D, die jeweils mit den gleichnamigen Steuereingängen des Multiplexers 28 verbunden sind. Wenn mindestens an einem der Steuereingänge A, B, C und D eine
logische "1" anliegt, dann stellt der Multiplexer 41
eine Verbindung zwischen dem Signalausgang 40 des Multiplexers 28 und der digitalen Ausgangsleitung 10 her. Der
Multiplexer 41 ist damit im Testbetrieb und gibt Testdaten
auf die digitale Ausgangsleitung 10. Nur wenn an allen
Steuereingängen A, B, C und D eine logische "0" anliegt,
ist die Verbindung zwischen dem Signalausgang 40 und
der digitalen Ausgangsleitung 10 unterbrochen und der
zweite Signalweg 9 ist auf die digitale Ausgangsleitung

M.R.Briscoe -1

10 durchgeschaltet. Damit erreicht das auf dem zweiten Signalweg 9 verarbeitete digitale Signal die digitale Ausgangsleitung 10 und die Kodier-/Dekodieranordnung 1 arbeitet damit in ihrer normalen Betriebsart. Das Oder-Gatter 43 steuert außerdem ein Oder-Gatter 44 an, das gleichzeitig von einem Aktivierungssignal (TX TS EN) angesteuert wird, in dem die Sendezeitschlitze enthalten sind. Wenn eines dieser beiden Steuersignale auf logisch "1" liegt, dann wird durch das Ausgangssignal des Oder-Gatters 44 der Ausgang eines Bustreibers 45 niederohmig gemacht, so daß das abgehende Digitalsignal an der digitalen Ausgangsleitung 10 erscheint.

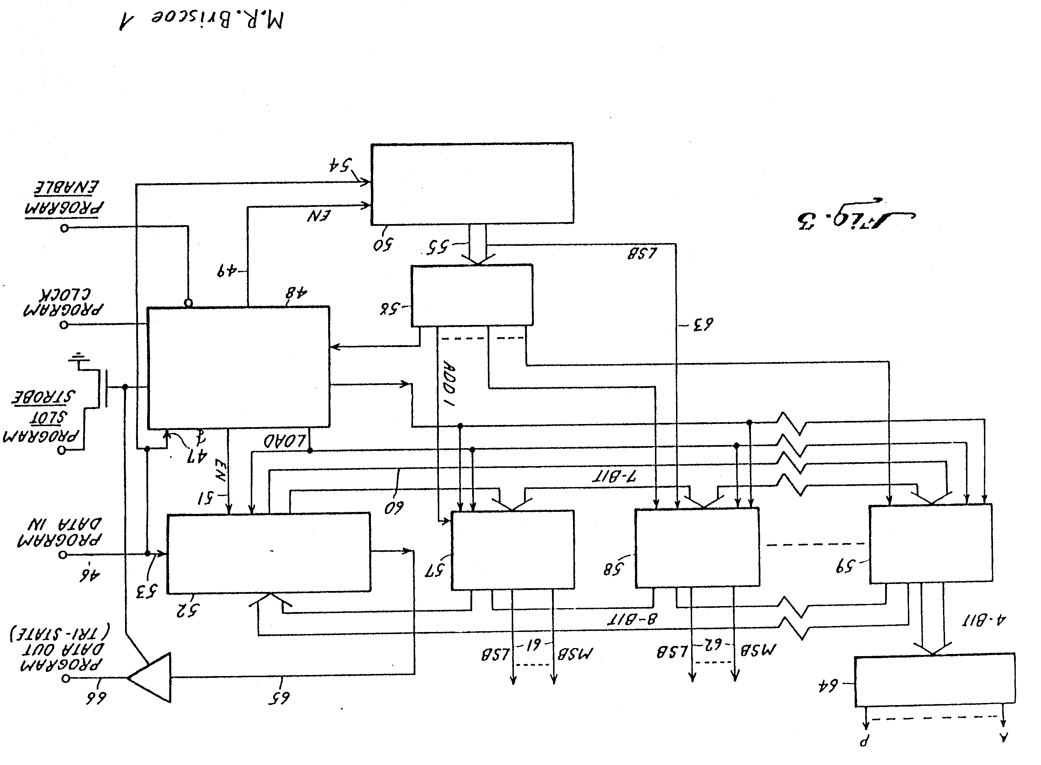

Anhand der Figur 3 wird nun das Steuerteil der Kodier-/Dekodieranordnung 1 beschrieben. Das Steuerteil weist einen Dateneingang 46 auf, über den ein vom Datenausgang des Schieberegisters 3 nach Figur 1 kommender programmierter digitaler Datenstrom an einen Dateneingang 47 einer Steuereinheit 48 gelangt. Das Signal am Dateneingang 47 enthält sowohl Adress- also auch Datenworte, jeweils in Form eines 8-Bit-Worts. Der entscheidende Unterschied zwischen diesen beiden Arten von Worten liegt darin, daß das meistsignifikante Bit in jedem Adresswort eine binäre "0" und das meistsignifikante Bit eines Datenworts jeweils eine binäre "1" ist. Je nachdem ob das jeweils erste Bit eines am Dateneingang 47 der Steuereinheit 48 ankommenden Wortes eine "0" oder eine "1" ist, sendet die Steuereinheit 48 entweder über eine Verbindungsleitung 49 an ein 7-Bit-Adress-Schieberegister 50 ein Aktivierungssignal EN oder über eine Verbindungsleitung 51 an ein 8-Bit-Datenschieberegister 52. Der Dateneingang 46 ist außerdem mit Dateneingängen 53 und 54 der beiden Schieberegister 52 bzw. 50 verbunden. Damit wird der auf das meistsignifikante Bit folgende Datenstrom

M.R. Briscoe -1


seriell entweder in das Adress-Schieberegister 50 oder in das Datenschieberegister 52 geladen, je nachdem, ob es sich um ein Adress- oder um ein Datenwort handelt.

Ein (mehrstelliger) Ausgang 55 des Adress-Schieberegisters 50 führt zu einem Eingang eines Adressdekoders 56. Der Adressdekoder 56 weist eine Vielzahl von Steuerausgängen auf, die zu entsprechenden Steuereingängen einer Vielzahl von Zwischenspeichern führen, von denen nur ein Zwischenspeicher für den Sendezeitschlitz 57, ein Zwischenspeicher für die Verstärkung im Empfängerteil 58, und ein Zwischenspeicher für Testanweisungen 59 gezeigt sind. Die Arbeitsweise der nicht gezeigten Zwischenspeicher entspricht der der gleichartigen Zwischenspeicher 57 und 58. Sie wurden deshalb in der Zeichnung weggelassen und werden auch nicht weiter beschrieben. Ein weiterer Ausgang des Adressdekoders 56 führt zu einem Steuereingang der Steuereinheit 48. Die Signale an den Steuereingängen der Zwischenspeicher 57 bis 59 aktivieren jeweils nur denjenigen der Zwischenspeicher 57 bis 59, der vom Adressdekoder 56 adressiert wird; die übrigen Zwischenspeicher bleiben inaktiv. Anschließend wird auf das Erscheinen des nächsten 8-Bit-Worts am Dateneingang 46 gewartet. In den meisten Fällen ist das nächste Wort ein Datenwort, das Informationen enthält, beispielsweise Koeffizienten zum Einstellen der verschiedenen Filter oder Zeitinformationen zur Auswahl des richtigten Zeitschlitzes für das Sende- oder Empfangssignal. Wenn dieses durch eine führende "1" gekennzeichnete Datenwort ankommt, dann werden die auf das meistsignifikante Bit folgenden Bits des Worts seriell in das Daten-Schieberegister 52 eingeschoben. Darauf gibt die Steuereinheit 48 einen Ladebefehl (LOAD) an die Zwischenspeicher 57 bis 59 und die im Datenschieberegister 52 gespeicherte Information wird auf einen 7-Bit-

M.R.Briscoe -1

Datenbus 60 gegeben. Dieses Datenwort liegt gleichzeitig an allen Zwischenspeichern 57 bis 59 an, es wird jedoch nur derjenige der Zwischenspeicher 57 bis 59 mit dem 7-Bit-Datenwort geladen, der durch ein Signal vom Adressdekoder 56 aktiviert ist. Jeder der Zwischenspeicher 57 und 58 weist einen Satz Ausgangsleitungen 61 bzw. 62 auf, der jeweils zu der zugehörigen zu steuernden Einheit führt. Im gezeigten Beispiel ist das eine (nicht eingezeichnete) Steuerlogik für die Zeitschlitze bzw. das Empfangsfilter mit Verstärker 12 nach Figur 2. Die von den Ausgangslei-tungen 62 übermittelte Information bestimmt die Filter-koeffizienten und die Verstärkung des Empfangsfilters mit Verstärker 12.

Der Datenbus 60 überträgt nur 7-Bit-Worte, für die Einstel-lung des Empfangsfilters mit Verstärker 12 wird jedoch ein 8-Bit-Wort benötigt. Um das fehlende meistsignifikante Bit des Datenworts zu ergänzen sind dem zugehörigen Zwischenspeicher 58 zwei Adressen zugeordnet, die sich nur in der geringstsignifikanten Bitstelle der Adresse unterscheiden. Diese geringstsignifikante Bitstelle der Adresse wird über eine Verbindung 63 dem Zwischenspeicher 58 zugeführt. Wenn dann der Zwischenspeicher 58 aktiviert wird, so wird das geringstsignifikante Bit der Adresse zum fehlenden Bit des Datenworts.

Die vier geringstsignifikanten Bits des im Zwischenspeicher für Testanweisungen 59 enthaltenen Datenworts werden in paralleler Form in einen Testdekoder 64 (TEST ROM) übergeben. Dieser Testdekoder 64 weist Steuerausgänge A bis P auf, die den gleichnamigen Steuereingängen A bis P der Multiplexer 28, 24, 23, 22, 21, 20 und 19, des Oder-Gatters 43 und der Filter 12 und 17 entsprechen. Der Testdekoder

M.R.Briscoe -1

64 weist eine Vielzahl von Speicherplätzen auf, die durch die vier vom Zwischenspeicher für Testanweisung 59 an den Testdekoder 64 übertragenen Bits selektiv adressiert werden. Die im Testdekoder 64 gespeicherte Zuordnungstabelle ist in Tabelle 1 wiedergegeben. Der Testdekoder 64 ist ein Festwertspeicher mit 16 durch die vier vom Zwischenspeicher 59 kommenden Bit adressierbaren Speicherplätzen zu je 16 Stellen, die den 16 Steuerausgängen A bis P zugeordnet sind.

Aus Figur 3 ist auch ersichtlich, daß der Inhalt des Daten-Schieberegisters 52 über eine Leitung 65 an einen Ausgang 66 übertragen werden kann. Damit kann der Inhalt des Daten-Schieberegisters 52 beispielsweise zu Überprüfungszwecken ausgelesen werden. Weiter ist ein 8-Bit-Datenbus 67 erkennbar, mit dem Daten von den Zwischenspeichern 57 bis 59 an das Daten-Schieberegister 52 übertragen werden können. Damit kann der vorangehende oder gegenwärtige Inhalt des jeweils aktivierten Zwischenspeichers 57 bis 59 am Ausgang 66 ausgelesen werden.

Das Schieberegister 3 in der Figur 1 weist eine Vielzahl von bidirektionalen Ein-/Ausgängen D/Q0 ... D/Q7 auf. Damit ist das Schieberegister 3 über einen zugehörigen Datenbus mit einem (nicht gezeigten) Mikroprozessor in Verbindung und wird von diesem gesteuert. Der Aufbau und die Wirkungsweise dieses nicht gezeigten Mikroprozessors ist nicht Gegenstand der vorliegenden Erfindung. Dieser Mikroprozessor legt die Testabläufe fest und bestimmt die verschiedenen Koeffizienten, beispielsweise die Zeitschlitze für die Sende- und Empfangskanäle, die optimale Verstärkung der Verstärker, die richtigen Werte für die Verbindung zwischen Sende- und Empfangsfilter usw. Die

M.R.Briscoe -1

Kriterien für die Auswahl dieser Parameter sind dem auf diesem Gebiet tätigen Fachmann geläufig und brauchen hier nicht weiter erörtert zu werden.

M.R.Briscoe -1

## Tabelle 1

| Eingang | | | | Ausgang | | | | | | | | | | | | | | | |
|---|---|---|---|---|---|---|---|---|---|---|---|---|---|---|---|---|---|---|---|
| | | | | A | B | C | D | E | F | G | H | I | J | K | L | M | N | O | P |
| 0 | 0 | 0 | 0 | 0 | 0 | 0 | 0 | 0 | 0 | 0 | 0 | 0 | 0 | 0 | 0 | 0 | 0 | 0 | 0 |
| 0 | 0 | 0 | 1 | 0 | 0 | 1 | 0 | 0 | 0 | 0 | 1 | 1 | 0 | 0 | 1 | 0 | 1 | 0 | 1 |
| 0 | 0 | 1 | 0 | 0 | 0 | 0 | 1 | 0 | 1 | 0 | 1 | 1 | 0 | 0 | 1 | 0 | 0 | 0 | 1 |
| 0 | 0 | 1 | 1 | 0 | 1 | 1 | 1 | 0 | 1 | 0 | 1 | 1 | 0 | 0 | 1 | 0 | 0 | 0 | 1 |
| 0 | 1 | 0 | 0 | 0 | 0 | 1 | 1 | 0 | 1 | 0 | 1 | 1 | 0 | 0 | 1 | 0 | 0 | 0 | 1 |
| 0 | 1 | 0 | 1 | 0 | 1 | 1 | 0 | 0 | 0 | 1 | 1 | 1 | 0 | 0 | 0 | 1 | 0 | 1 | 0 |
| 0 | 1 | 1 | 0 | 0 | 1 | 0 | 0 | 0 | 0 | 1 | 0 | 1 | 0 | 0 | 0 | 0 | 0 | 1 | 0 |
| 0 | 1 | 1 | 1 | 1 | 0 | 0 | 0 | 0 | 0 | 1 | 0 | 0 | 0 | 0 | 0 | 0 | 0 | 1 | 0 |
| 1 | 0 | 0 | 0 | 0 | 0 | 0 | 0 | 1 | 0 | 1 | 0 | 0 | 0 | 0 | 0 | 0 | 0 | 1 | 0 |
| 1 | 0 | 0 | 1 | 0 | 1 | 0 | 0 | 0 | 0 | 0 | 0 | 0 | 0 | 0 | 0 | 1 | 0 | 0 | 0 |
| 1 | 0 | 1 | 0 | 0 | 0 | 0 | 0 | 0 | 0 | 0 | 1 | 0 | 1 | 0 | 0 | 0 | 0 | 0 | 0 |
| 1 | 0 | 1 | 1 | 0 | 1 | 0 | 1 | 0 | 0 | 0 | 0 | 0 | 0 | 1 | 0 | 0 | 0 | 0 | 0 |
| 1 | 1 | 0 | 0 | 1 | 0 | 0 | 1 | 0 | 0 | 0 | 0 | 0 | 0 | 0 | 0 | 0 | 0 | 0 | 0 |
| 1 | 1 | 0 | 1 | 1 | 0 | 1 | 0 | 0 | 0 | 0 | 0 | 0 | 0 | 0 | 0 | 0 | 0 | 0 | 0 |

M.R.Briscoe -1


Bezugszeichenliste:


| 1 | Kodier-/Dekodieranordnung |
| 2 | Auswahlmultiplexer |
| 3 | Schieberegister |
| 4 | Logikschaltung |
| 5 | erster Signalweg |
| 6 | digitale Eingangsleitung |
| 7 | analoge Ausgangsleitung |
| 8 | analoge Eingangsleitung |
| 9 | zweiter Signalweg |
| 10 | digitale Ausgangsleitung |
| 11 | Ein-/Ausgangsbaugruppe mit Expander |
| 12 | Empfangsfilter mit Verstärker |
| 13 | Interpolator und Digital-Analog-Wandler |
| 14 | Pulsbreitenmodulator |
| 15 | Analog-Digital-Wandler |
| 16 | Dezimiereinheit |
| 17 | Sendefilter mit Verstärker |
| 18 | Ein-/Ausgangsbaugruppe mit Kompressor |
| 19 | Multiplexer |
| 20 | Multiplexer |
| 21 | Multiplexer |
| 22 | Multiplexer |
| 23 | Multiplexer |
| 24 | Multiplexer |
| 25 | Testleitung |
| 26 | Verbindungsleitung |
| 27 | Verbindungsleitung |
| 28 | Multiplexer |
| 29-39 | Signaleingänge |
| 40 | Signalausgang |
| 41 | Multiplexer |

M.R.Briscoe -1


42        Steuereingang

43        Oder-Gatter

44        Oder-Gatter

45        Bustreiber

46        Dateneingang

47        Dateneingang

48        Steuereinheit

49        Verbindungsleitung

50        Adress-Schieberegister

51        Verbindungsleitung

52        Daten-Schieberegister

53        Dateneingang

54        Dateneingang

55        Ausgang

56        Adressdekoder

57        Zwischenspeicher für Sendezeitschlitz

57        Zwischenspeicher für Verstärkung in Empfängerteil

58        Zwischenspeicher für Testanweisungen

60        Datenbus

61        Satz von Ausgangsleitungen

62        Satz von Ausgangsleitungen

63        Verbindung

64        Testdekoder

65        Leitung

66        Ausgang

67        Datenbus

68        Verbindungsleitung

A,B,C,D      Steuereingänge, Steuerausgänge

E,F,G,H,I,J,K,L,M,O,P      Steuereingänge, Steuerausgänge

D/Q0 ... D/Q7      bidirektionale Ein-/Ausgänge

M.R.Briscoe -1

Patentansprüche

1. Anordnung zur digitalen Verarbeitung von Sprachsignalen mit mindestens einem Signalweg (5, 9) und mindestens zwei im Verlauf dieses Signalwegs (5, 9) hintereinander angeordneten Baugruppen (11 ... 14, 15 ... 18)
zur Signalverarbeitung (z.B. Verstärker oder Filter),
d a d u r c h   g e k e n n z e i c h n e t ,  daß
eine Prüfeinrichtung (19 ... 66) vorhanden ist, die mindestens folgende Teile enthält:
- mindestens eine Umwegleitung (25) zur Überbrückung mindestens einer der genannten Baugruppen (11 ... 13, 16
  ... 18),
- mindestens einen Wahlschalter (19 ... 24), der vor dem
  Signaleingang einer der genannten Baugruppen (12 ... 14,
  16 ... 18) angeordnet ist und den zugehörigen Signaleingang wahlweise mit dem Signalausgang der im selben
  Signalweg (5, 9) vorangehenden Baugruppe (11 ... 13,
  15 ... 17) oder der Umwegleitung (25) verbindet, und
- eine Steuereinrichtung (46 ... 66) zum Ansteuern des
  oder der Wahlschalter (19 ... 24).

2. Anordnung nach Anspruch 1, dadurch gekennzeichnet,
daß ein erster Signalweg (5) zur Verarbeitung ankommender

ZT/P1-Bs/Bl
11.04.1984

M.R.Briscoe -1


digitaler Sprachsignale und deren Ausgabe in analoger Form vorgesehen ist, daß ein zweiter Signalweg (9) zur digitalen Verarbeitung analog ankommender Sprachsignale vorgesehen ist, daß der erste und der zweite Signalweg (5, 9) je eine Anzahl aufeinanderfolgender, digital arbeitender Baugruppen (11 ... 13, 16 ... 18) enthält, daß durch die Prüfeinrichtung (19 ... 66) sowohl Baugruppen (11 ... 13) des ersten Signalwegs (5) als auch Baugruppen (16 ... 18) des zweiten Signalwegs (9) überbrückt werden können und daß auch Verbindungen zwischen den Signalwegen (5, 9) aufgebaut werden können.


3.     Anordnung nach Anspruch 2, dadurch gekennzeichnet, daß jeder Wahlschalter (19 ... 24) ein Multiplexer ist, der jeweils vor einer der genannten Baugruppen (12... 14, 16 ... 18) angeordnet ist, der einen Ausgang aufweist, der mit dem Eingang der folgenden Baugruppe (12 ... 14, 16 ... 18) verbunden ist, der mehrere Eingänge aufweist, von denen je einer mit dem Ausgang der im selben Signalweg (5,9) vorangehenden Baugruppe verbunden ist, während andere Eingänge des jeweiligen Multiplexers (19 ... 24) mit dem jeweils anderen Signalweg (9, 5) und/oder der Umwegleitung (25) verbunden sind, der wenigstens einen Steuereingang (E ... P) aufweist, über den die Verbindungen zwischen den Eingängen und dem Ausgang des jeweiligen Multiplexers (19 ... 24) gesteuert werden können und daß die Steuereinrichtung (46 ... 66) Baugruppen (52, 59, 64) zum Ansteuern der Steuereingänge der Multiplexer (19 ... 24) enthält.


4.     Anordnung nach Anspruch 3, dadurch gekennzeichnet, daß wenigstens bei einem Teil der Multiplexer (19, 20, 22, 23) ein Eingang mit Masse verbunden ist.

M.R.Briscoe -1

5.      Anordnung nach Anspruch 3 oder 4, dadurch gekennzeichnet, daß ein Testdekoder (64) vorhanden ist, der als
Speicher aufgebaut ist und eine Vielzahl von Speicherplätzen mit verschiedenen Adressen aufweist, die jeweils
eine andere Kombination binärer Ziffern speichern, daß der
Testdekoder (64) eine Vielzahl von Adresseingängen zur
wahlweisen Adressierung der Speicherplätze und eine
Vielzahl von Ausgängen aufweist, die mit den Steuereingängen der Multiplexer (19 ... 24) verbunden sind und daß
eine Vorrichtung (48, 50, 52, 56, 59) vorhanden ist,
mittels der ausgewählte Adressen an die Adresseingänge des
Testdekoders (64) angelegt werden können.

6.      Anordnung nach Anspruch 5, dadurch gekennzeichnet,
daß der Testdekoder (64) ein Festwertspeicher (ROM) ist.

7.      Anordnung nach Anspruch 5 oder 6, dadurch gekennzeichnet, daß ein Datenspeicher (52) vorhanden ist, der in
der Lage ist, Daten zu speichern, die die Adresse des auszuwählenden Speicherplatzes enthalten, daß der Datenspeicher (52) eine Vielzahl paralleler Datenausgänge enthält
und daß ein Datenbus (60) vorhanden ist, der die Datenausgänge des Datenspeichers (52) mit den Adresseingängen des
Testdekoders (64) verbindet.

8.      Anordnung nach Anspruch 7, dadurch gekennzeichnet,
daß ein Zwischenspeicher (59) in den Datenbus (60) zwischen
die Ausgänge des Datenspeichers (52) und die Adresseingänge
des Testdekoders (64) eingefügt ist, daß der Zwischenspeicher (59) einen Setzeingang (LOAD) aufweist, über den der
Zwischenspeicher (59) veranlaßt wird, Daten vom Datenbus
(60) zu übernehmen und daß eine Vorrichtung (46 ... 48)

M.R.Briscoe -1

vorhanden ist, mit der der Setzeingang (LOAD) des Zwischenspeichers (59) aktiviert werden kann, wenn der Zwischenspeicher (59) Daten übernehmen soll.

9.      Anordnung nach Anspruch 8, dadurch gekennzeichnet,
daß die Vorrichtung (46 ... 48) zur Aktivierung des Zwischenspeichers (59) eine Steuereinheit (48) enthält, die
durch von außen kommende Signale gesteuert wird.

10.      Anordnung nach Anspruch  8 oder 9, dadurch gekennzeichnet, daß der Zwischenspeicher (59) einen Aktivierungseingang aufweist  und daß eine Vorrichtung (50, 56) vorhanden ist,  mit der zumindest der Aktivierungseingang des
Zwischenspeichers (59) aktiviert werden kann, wenn der
Zwischenspeicher (59) durch ein Signal am Setzeingang (LOAD)
mit den auf dem Datenbus (60) übertragenen Daten geladen
werden soll.

11.      Anordnung nach  Anspruch 10, dadurch gekennzeichnet,
daß ein Adress-Speicher (50) vorhanden ist, der in der Lage
ist, wenigstens eine weitere Adresse zu speichern, die dem
Zwischenspeicher (59)  zugeordnet ist, daß ein Adressdekoder (56) vorhanden ist, der zwischen dem Adress-Speicher
(50) und mindestens  dem Aktivierungseingang des Zwischenspeichers (59) angeordnet ist und daß der Adressdekoder
(56) den Aktivierungseingang des Zwischenspeichers (59)
dann aktiviert, wenn die dem Zwischenspeicher (59) zugeordnete Adresse im Adress-Speicher (50) auftritt.

12.      Anordnung nach Anspruch 11, dadurch gekennzeichnet,
daß mindestens ein weiterer Zwischenspeicher (57, 58)
vorhanden ist, der dazu dient, die Betriebseigenschaften

M.R.Briscoe -1

einer der Baugruppen (12, 17) im ersten oder zweiten Signalweg (5, 9) zu beeinflussen, daß diesem zusätzlichen Zwischenspeicher (57, 58) eine zusätzliche Adresse zugeordnet ist, daß der zusätzliche Zwischenspeicher (57, 58) zwischen den Datenbus (60) und die betroffene Baugruppe (12, 17) in ähnlicher Weise eingefügt ist wie der (erste) Zwischenspeicher (59), daß der weitere Zwischenspeicher (57, 58) einen eigenen Setzeingang aufweist, der gleichzeitig mit dem Setzeingang des (ersten) Zwischenspeichers (59) betrieben wird, daß der zusätzliche Zwischenspeicher (57, 58) einen eigenen Aktivierungseingang aufweist, der mit dem Adressdekoder (56) verbunden ist und dann aktiviert wird, wenn die Betriebseigenschaften der genannten Baugruppe (12, 17) in Abhängigkeit von den Daten auf dem Datenbus (60) verändert werden sollen.

13. Anordnung nach einem der Ansprüche 1 bis 12, dadurch gekennzeichnet, daß eine Vorrichtung (28 ... 45) vorhanden ist, mit der zu Prüfzwecken an verschiedenen Punkten wahlweise Informationen abgenommen und nach außen gegeben werden können.

14. Anordnung nach Anspruch 13, dadurch gekennzeichnet, daß ein zusätzlicher Multiplexer (28) vorhanden ist, der eine Vielzahl von Dateneingängen (29 ... 39) aufweist, die mit Ausgängen der zu prüfenden Baugruppen (11 ... 13, 15 ... 17) verbunden sind, daß der Multiplexer (28) einen Datenausgang (40) und eine Mehrzahl von Steuereingängen (A, B, C, D) aufweist, durch die wahlweise einer der Dateneingänge (29 ... 39) mit dem Datenausgang (40) des Multiplexers (28) verbunden werden kann und daß eine Auswahlschaltung vorhanden ist, mit der die Steuerein-

M.R.Briscoe -1

gänge (A, B, C, D) des zusätzlichen Multiplexers (28) angesteuert werden können.

15.    Anordnung nach Anspruch 14, dadurch gekennzeichnet, daß die Auswahlschaltung zur Ansteuerung der Steuereingänge (A, B, C, D) des zusätzlichen Multiplexers (28) im Testdekoder (64) enthalten ist.

16.    Anordnung nach einem der Ansprüche 1 bis 15, dadurch gekennzeichnet, daß sämtliche Baugruppen und Verbindungen in einer gemeinsamen integrierten Schaltung enthalten sind.

Fig. 1

0123243

1/3

M.R. Briscoe 1

74LS299

3

Q₇ Q₆ Q₅ Q₄ Q₃ Q₂ Q₁ Q₀   7 6 5 4 3 2 1 0

S₁ S₀ Ḡ₁

4

68

+5

2

74LS138

G₂B G₂A

G₁

A₂ A₁ A₀

PROGRAM  SLOT STROBE  DATA OUT  DATA IN  ENABLE  CLOCK

FRAME SYNC  REC DATA IN  TX DATA OUT  DATA CLOCK

6  10

Fig. 2

2/3

0123243

M.R. Briscoe 1

Fig. 3

M.R. Briscoe 1

0123243